(19) Europäisches Patentamt
European Patent Office
Office européen des brevets

(11) **EP 4 262 249 A1**

(12) **EUROPÄISCHE PATENTANMELDUNG**

(43) Veröffentlichungstag:
   **18.10.2023   Patentblatt 2023/42**

(21) Anmeldenummer: **22168133.1**

(22) Anmeldetag: **13.04.2022**

(51) Internationale Patentklassifikation (IPC):
   *H04W 4/38* (2018.01)    *H04W 4/02* (2018.01)
   *G06K 9/62* (2022.01)    *H04W 4/40* (2018.01)
   *H04W 4/42* (2018.01)    *H04W 4/30* (2018.01)
   *H04L 67/52* (2022.01)    *H04W 88/02* (2009.01)
   *G06Q 20/08* (2012.01)    *G06Q 20/14* (2012.01)
   *G06Q 30/02* (2023.01)

(52) Gemeinsame Patentklassifikation (CPC):
   **H04W 4/023; H04W 4/38;** G06Q 20/085;
   G06Q 20/145; G06Q 30/0284; H04L 67/52;
   H04W 4/30; H04W 4/40; H04W 4/42

(84) Benannte Vertragsstaaten:
   **AL AT BE BG CH CY CZ DE DK EE ES FI FR GB
   GR HR HU IE IS IT LI LT LU LV MC MK MT NL NO
   PL PT RO RS SE SI SK SM TR**
   Benannte Erstreckungsstaaten:
   **BA ME**
   Benannte Validierungsstaaten:
   **KH MA MD TN**

(71) Anmelder: **Siemens Mobility GmbH**
   **81739 München (DE)**

(72) Erfinder:
   • **Blanke-Miehe, Michele**
    **22179 Hamburg (DE)**
   • **Kuhrt, Daniel**
    **25421 Pinneberg (DE)**
   • **Nicklas, Moritz**
    **23566 Lübeck (DE)**
   • **Stubbe, Quirin**
    **21614 Buxtehude (DE)**

(74) Vertreter: **Siemens Patent Attorneys**
   **Postfach 22 16 34**
   **80506 München (DE)**

(54) **VERFAHREN UND SYSTEM ZUM BESTIMMEN EINES AUFENTHALTS EINES MOBILEN ENDGERÄTES**

(57)    Die Erfindung betrifft ein Verfahren zum Bestimmen eines Aufenthalts eines mobilen Endgerätes (2), insbesondere eines Smartphones, eines Benutzers (1) relativ zu einem Fahrzeug (3), insbesondere einem öffentlichen Verkehrsmittel,
bei dem auf dem mobilen Endgerät (2) Sensordaten von mehreren Sensoren des mobilen Endgerätes (2) erzeugt werden,
bei dem mittels der Sensordaten wenigstens ein Wahrscheinlichkeitswert (7) ermittelt wird, der für eine Wahrscheinlichkeit repräsentativ ist, dass sich das mobile Endgerät (2) in dem Fahrzeug (3) befindet oder nicht, und bei dem der Aufenthalt in Abhängigkeit von dem wenigstens einen Wahrscheinlichkeitswert (7) bestimmt wird.

FIG 1

EP 4 262 249 A1

**Beschreibung**

Die Erfindung betrifft ein Verfahren und ein System zum Bestimmen eines Aufenthalts eines mobilen Endgerätes, insbesondere eines Smartphones, eines Benutzers relativ zu einem Fahrzeug, insbesondere einem öffentlichen Verkehrsmittel.

Derartige Verfahren und Systeme sind aus dem Stand der Technik bekannt und werden beispielsweise eingesetzt, um in öffentlichen Verkehrssystemen eine Fahrtdauer von Fahrgästen automatisch oder halbautomatisch zu ermitteln und anschließend einen Fahrpreis zu berechnen. Diese Systeme dienen dazu, die früher üblichen physisch vorhandenen Fahrscheine zu ersetzen und das Fahren der Fahrgäste zu vereinfachen. Beispielsweise sind in der EP 2 658 291 A1 oder der US 8,660,867 B2 solche Verfahren und Systeme beschrieben. Allerdings sind die vorhandenen Systeme nicht fehlerlos und es kann insbesondere zu Problemen zu kommen, wenn eine Mobilfunkverbindung der mobilen Endgeräte, mittels denen die Verfahren durchgeführt werden, schlecht oder unterbrochen ist.

Es ist daher die Aufgabe der vorliegenden Erfindung, ein Verfahren und System der eingangs genannten Art bereitzustellen, die weniger fehleranfällig und insbesondere auch mit einer schlechten oder gar keinen Mobilfunkverbindung auskommen.

Erfindungsgemäß wird die Aufgabe gelöst durch ein Verfahren zum Bestimmen eines Aufenthalts eines mobilen Endgerätes, insbesondere eines Smartphones, eines Benutzers relativ zu einem Fahrzeug, insbesondere einem öffentlichen Verkehrsmittel, bei dem auf dem mobilen Endgerät Sensordaten von mehreren Sensoren des mobilen Endgerätes erzeugt werden,

bei dem anhand der Sensordaten wenigstens ein Wahrscheinlichkeitswert ermittelt wird, der für eine Wahrscheinlichkeit repräsentativ ist, dass sich das mobile Endgerät in dem Fahrzeug befindet oder nicht, und
bei dem der Aufenthalt in Abhängigkeit von dem wenigstens einen Wahrscheinlichkeitswert bestimmt wird.

Die erfindungsgemäße Lösung hat den Vorteil, dass ein automatisches Bestimmen des Aufenthalts des mobilen Endgerätes und damit des Benutzers relativ zum Fahrzeug leicht und zuverlässig möglich ist. Das mobile Endgerät kann hierbei beispielsweise ein Smartphone, eine andere Art von Mobiltelefon, ein Tablet oder ein anderer mobiler Computer sein. Solche mobilen Endgeräte sind heute üblicherweise mit einer Vielzahl von Sensoren ausgestattet, die das erfindungsgemäße Verfahren nutzt. Unter dem Aufenthalt des mobilen Endgerätes relativ zum Fahrzeug ist zu verstehen, dass ein Aufenthaltsort bestimmt wird, aus dem dann eine Benutzung des Fahrzeugs abgeleitet werden kann.

Bei dem erfindungsgemäßen Verfahren werden zunächst auf dem mobilen Endgerät Sensordaten von den unterschiedlichen Sensoren erzeugt. Die Sensordaten können beispielsweise durch hardware- oder softwarebasierte Sensorik erzeugt werden und beispielsweise GNSS-Koordinaten eines Satellitennavigationssystems, Beschleunigungen, Geschwindigkeiten, Luftdruck, Schall oder eine Erkennung externer Infrastrukturen wie Beacons, WiFi, NFC, etc. sein. Wenn sich der Benutzer mit seinem mobilen Endgerät bewegt oder nicht bewegt, registrieren die Sensoren dies auf unterschiedliche Weise und ist dies aus den erzeugten Sensordaten in gewisser Weise ablesbar. Dies gilt sowohl beim Fahren in dem Fahrzeug als auch für einen Aufenthalt außerhalb des Fahrzeugs. Die Sensordaten können bei der erfindungsgemäßen Lösung ausschließlich auf dem mobilen Endgerät erzeugt werden. Dadurch ist keine Kommunikation mit einem weiteren Endgerät wie z.B. einem Servercomputer nötig.

Erfindungsgemäß wird anhand der erzeugten Sensordaten wenigstens ein Wahrscheinlichkeitswert ermittelt, der für die Wahrscheinlichkeit repräsentativ ist, dass sich das mobile Endgerät in dem Fahrzeug befindet oder nicht, d. h. ob eine Fortbewegung des Benutzers innerhalb eines öffentlichen Verkehrsmittels stattfindet oder beendet wurde. Bei dem mobilen Endgerät wird davon ausgegangen, dass der Benutzer dieses bei sich führt und somit der Aufenthaltsort des mobilen Endgerätes mit dem des Benutzers übereinstimmt. Es wird daher zwar der Aufenthalt des mobilen Endgerätes bestimmt, aber dadurch auf den Aufenthalt des Benutzers geschlossen. Daraus kann später die Benutzung des öffentlichen Verkehrsmittels durch den Benutzer abgeleitet und ein Fahrpreis berechnet werden.

Die erfindungsgemäße Wahrscheinlichkeitswertberechnung hat den Vorteil, dass viele Sensordaten berücksichtigt werden können, diese aber nicht alle eindeutig für den einen oder anderen Aufenthaltsort sprechen müssen. Konkret wird erfindungsgemäß der Aufenthalt des mobilen Endgerätes und dadurch des Benutzers relativ zu dem Fahrzeug in Abhängigkeit von dem Wahrscheinlichkeitswert bestimmt. Wenn der Wahrscheinlichkeitswert beispielsweise einen bestimmten Schwellwert übersteigt, kann dies für ein Verlassen des Fahrzeugs sprechen.

Die erfindungsgemäße Lösung kann durch vorteilhafte Ausgestaltung weiterentwickelt werden, wie sie im Folgenden beschrieben sind.

So können nacheinander mehrere Wahrscheinlichkeitswerte ermittelt und aus den mehreren Wahrscheinlichkeitswerten ein gemeinsames Aufenthaltssignal errechnet werden und der Aufenthalt in Abhängigkeit von dem Aufenthaltssignal bestimmt werden. Dies hat den Vorteil, dass die Zuverlässigkeit erhöht wird, weil Wahrscheinlichkeitswerte über einen längeren Zeitraum berücksichtigt werden. Ein voreilig detektiertes Aussteigen des Benutzers kann so verhindert werden. Erst wenn über eine längere Zeit die Wahrscheinlichkeitswerte dauerhaft denselben Aufenthaltsort, insbesondere ein Auschecken des Benutzers, anzeigen, wird dies im Aufenthaltssignal übernommen. Ferner kann für hintereinanderliegende Abschnitte mit zeitlich vorbestimmter Länge jeweils ein Wahrscheinlichkeitswert ermittelt werden. Es können auch bei der Berechnung des Aufenthaltssignals die mehreren Wahrscheinlichkeitswerte kumuliert werden oder Werte kumuliert werden, die jeweils anhand der mehreren Wahrscheinlichkeitswerte bestimmt werden. Beispielsweise kann das Aufenthaltssignal um einen Wert von 10% erhöht werden, wenn der Wahrscheinlichkeitswert in diesem Abschnitt oberhalb von 50% liegt.

Damit das Aufenthaltssignal nicht zu sehr in eine Richtung läuft, insbesondere wenn die Werte kumuliert werden, kann das Aufenthaltssignal nach oben und/oder nach unten beschränkt werden. Dies hat den Vorteil, dass das Verfahren nicht zu träge wird.

Um das Verfahren in bestimmten Bereichen zu vereinfachen, kann das Aufenthaltssignal durch wenigstens eine vorbestimmte Aktion am mobilen Endgerät, insbesondere eine Check-in-Aktion des Benutzers, auf einen vorbestimmten Wert gesetzt werden. Beispielsweise kann der Benutzer beim Einsteigen in das Fahrzeug den Check-in durch das Starten einer App auf seinem mobilen Endgerät mit gegebenenfalls einer Check-in-Handlung starten. Dies ist allgemein üblich und schadet nicht dem Komfort des Benutzers. Auf der anderen Seite sorgt es aber für eine hohe Sicherheit, dass sich das mobile Endgerät an einem bekannten Aufenthaltsort befindet, z. B. im Fahrzeug. Selbstverständlich kann mit dem erfindungsgemäßen Verfahren alternativ auch der Check-in automatisch, d. h. ohne Check-in-Aktion des Benutzers, herbeigeführt werden.

In einer vorteilhaften Ausgestaltung kann ein automatischer Check-out des mobilen Endgerätes in Abhängigkeit von dem Aufenthaltssignal ermittelt werden. Beispielsweise kann der Check-out automatisch erfolgen, wenn das Aufenthaltssignal einen bestimmten Wert über- bzw. unterschreitet.

In einer vorteilhaften Ausgestaltung kann bei der Ermittlung des wenigstens einen Wahrscheinlichkeitswerts wenigstens eine Beobachtung berücksichtigt werden, wenn eine oder mehrere vorbestimmte Bedingungen für diese Beobachtung innerhalb der Sensordaten erfüllt sind. Dies hat den Vorteil, bestimmte Beobachtungen stärker für den Aufenthalt des mobilen Endgeräts in dem Fahrzeug sprechen als andere und dies so berücksichtigt werden kann. Beispiele für unterschiedliche Arten von Beobachtungen sind: das Erkennen von Bluetooth-Beacons; ein Fahren, das über eine Auswertung von Geopositionen ermittelt wird oder das Erkennen einer Position außerhalb des Fahrzeugs durch die Auswertung von sogenannten Activities. Acitivties sind von modernen Smartphones automatisch erzeugte Signale anhand von Sensordatenauswertungen, die für ein bestimmtes Verhalten des Benutzers sprechen. Da die unterschiedlichen Beobachtungen unterschiedlich stark für den Aufenthalt in dem Fahrzeug bewertet werden können, kann die wenigstens eine vorbestimmte Beobachtung bei der Ermittlung des wenigstens einen Wahrscheinlichkeitswerts individuell gewichtet werden.

Um eine genauere Berechnung der Wahrscheinlichkeit durchführen zu können, kann bei der Ermittlung des Wahrscheinlichkeitswerts eine bedingte Wahrscheinlichkeit berechnet werden. Unter einer sogenannten bedingten Wahrscheinlichkeit wird die Wahrscheinlichkeit des Eintretens eines Ereignisses verstanden unter der Bedingung, dass das Eintreten eines anderen Ereignisses bereits bekannt ist. Z. B. die Wahrscheinlichkeit, dass das mobile Endgerät in dem Fahrzeug ist, unter der Bedingung, dass innerhalb eines Zeitraums keine Veränderung in den Geo-Koordinaten registriert wurde.

Um die unterschiedlichen Wahrscheinlichkeitswerte synchron zu aktualisieren, kann der Wahrscheinlichkeitswert periodisch jeweils für einen vorbestimmten Zeitabschnitt bestimmt werden.

Um einen besonders hohen Datenschutz zu gewährleisten, kann das Verfahren ausschließlich auf dem mobilen Endgerät durchgeführt werden. Dies hat große Vorteile, weil auch hohe Datenschutzregeln eingehalten werden können und keine Kosten für eine permanente Mobilfunkverbindung anfallen.

Ferner können Informationen zum bestimmten Aufenthalt vom mobilen Endgerät an einen Servercomputer gesendet werden. Dies hat den Vorteil, dass beispielsweise die Fahrpreisermittlung und die Abrechnung mit dem Benutzer über einen Servercomputer sehr viel einfacher organisierbar ist.

Des Weiteren wird ein Computerprogrammprodukt mit Programmbefehlen zur Durchführung des genannten erfindungsgemäßen Verfahrens und/oder dessen Ausführungsbeispielen beansprucht, wobei mittels des Computerprogrammprodukts jeweils das erfindungsgemäße Verfahren und/oder dessen Ausführungsbeispiele durchführbar sind. Das Computerprogrammprodukt kann beispielsweise eine App für ein Smartphone sein, die über einen App-Store verfügbar ist und auf dem mobilen Endgerät installiert wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Die Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in ein mobiles Endgerät eingelesen und führt die Programmbefehle aus, sodass das erfindungsgemäße Verfahren auf einem mobilen Endgerät zur Ausführung gebracht wird. Die Bereitstellung erfolgt beispielsweise über den oben bereits genannten App-Store per Download.

Weiterhin betrifft die Erfindung ein mobiles Endgerät, insbesondere Smartphone, das zur Durchführung des Verfahrens nach einem der oben beschriebenen Ausführungsformen ausgebildet ist.

Schließlich betrifft die Erfindung auch ein System zum Bestimmen eines Aufenthalts eines mobilen Endgerätes, insbesondere eines Smartphones, eines Benutzers relativ zu einem Fahrzeug, insbesondere einem öffentlichen Verkehrsmittel, mit wenigstens einem Servercomputer, und mit wenigstens einem einem Benutzer zugeordneten mobilen Endgerätnach vorheriger beschriebener Ausführung, das zum Übermitteln wenigstens einer Information zu dem bestimmten Aufenthalt an den Servercomputer ausgebildet ist, wobei der Servercomputer zum Ermitteln eines Fahrpreises für den Aufenthalt ausgebildet ist.

Im Folgenden wird die Erfindung mit Bezug auf die beigefügten Zeichnungen erläutert.

Es zeigen:

Fig. 1    eine schematische Darstellung einer beispielhaften Ausführungsform der Erfindung;

Fig. 2    eine schematische Darstellung eines Verlaufs der Wahrscheinlichkeit während des erfindungsgemäßen Verfahrens;

Fig. 3    eine schematische Darstellung eines Verlaufs der Wahrscheinlichkeit und eines Aufenthaltssignals während des erfindungsgemäßen Verfahrens.

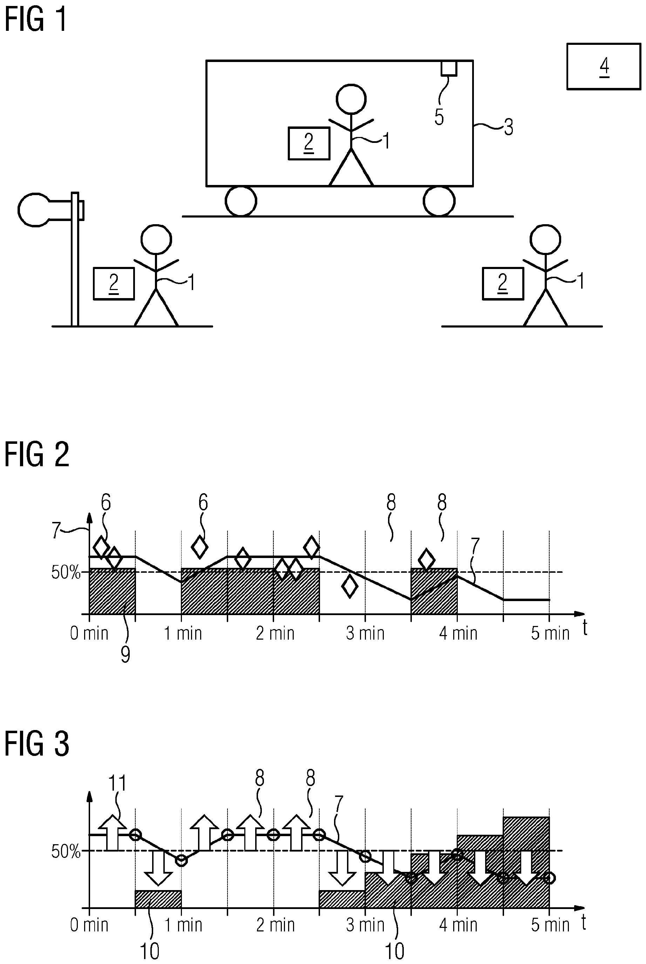

Im Folgenden wird die Erfindung mit Bezug auf die beispielhafte Ausführungsform in den Figuren 1-3 beschrieben.

Ein Benutzer 1 führt ein mobiles Endgerät 2 mit sich, beispielsweise in seiner Hosentasche oder Handtasche. Das mobile Endgerät soll hier in dieser beispielhaften Ausführungsform ein Smartphone sein, es kann aber auch ein Tablet, ein anderes Mobiltelefon oder ein anderer mobiler Computer sein. Der Benutzer 1 nutzt zeitweise ein Fahrzeug 3, das in dieser beispielhafte Ausführungsform ein öffentliches Verkehrsmittel darstellen soll. Das Fahrzeug 3 kann beispielsweise ein Bus, eine Straßenbahn, eine U-Bahn oder ähnliches sein.

In der schematischen Darstellung in Fig. 1 sind mehrere zeitlich hintereinander stattfindende Situationen des Benutzers 1 dargestellt. Auf der linken Seite wartet der Benutzer 1 an einer Haltestelle auf das Fahrzeug 3, in der Mitte ist der Benutzer 1 in das Fahrzeug 3 eingestiegen und fährt darin mit und in der Situation auf der rechten Seite hat der Benutzer 1 das Fahrzeug 3 wieder verlassen und geht zu Fuß oder steht. Das mobile Endgerät 2 des Benutzers 1 umfasst wenigstens eine Software in Form einer App, die mit Hilfe des erfindungsgemäßen Verfahrens den Aufenthalt des mobilen Endgerätes 2 in dem Fahrzeug 3 bestimmt. Anschließend können Informationen über den Aufenthalt beispielsweise an einem Servercomputer 4 für eine automatische Fahrpreisberechnung gesendet werden.

Das mobile Endgerät 2 umfasst wie heute üblich eine Vielzahl von software- und/oder hardwarebasierten Sensoren, die beispielsweise GNS-Koordinaten, Beschleunigung, Geschwindigkeit, Luftdruck, Schall, Signale von externer Infrastruktur wie Beacons, WLAN, NFC, etc. erkennen oder ermitteln. Verschiedenste äußere Ereignisse werden von den Sensoren des mobilen Endgeräts 2 registriert und erzeugen dadurch Sensordaten. Solche Ereignisse können beispielsweise eine Bewegung und damit eine Positionsänderung, Beschleunigung, Temperaturänderung, der Empfang eines Beacon-Signals, das Registrieren einer Lautsprecher-Durchsage oder ähnliches sein.

Das erfindungsgemäße Verfahren schätzt anhand der unterschiedlichsten Sensordaten des mobilen Endgeräts 2 eine Wahrscheinlichkeit ab, ob sich das mobile Endgerät 2 in dem Fahrzeug 3 befindet oder nicht. Mit Hilfe einer Analyse der Sensordaten wird auf ein oder mehrere stattgefundene Ereignisse geschlossen. Diese Ereignisse wiederum sprechen mit einer gewissen Wahrscheinlichkeit für eine Position des Endgerätes 2 in dem Fahrzeug oder außerhalb des Fahrzeugs.

In der schematischen Darstellung in Fig. 2 sind die aus den Sensordaten registrierten bzw. herausgelesenen Ereignisse 6, die das mobile Endgerät 2 registriert, in Form von Rauten dargestellt. Auf der x-Achse ist die Zeit t dargestellt und auf der y-Achse eine mit dem erfindungsgemäßen Verfahren berechnete Wahrscheinlichkeit, dass sich das mobile Endgerät 2 des Benutzers 1 im Fahrzeug 3 befindet. Ein Wahrscheinlichkeitswert 7 wird bei der beispielhaften Ausführungsform in Prozent der Wahrscheinlichkeit angegeben, dass sich das mobile Endgerät 2 in dem Fahrzeug befindet. Bei einem Wert von 100% wäre es sozusagen als 100% sicher anzusehen, dass sich das mobile Endgerät 2 in dem Fahrzeug 3 befindet.

Bei der beispielhaften Ausführungsform in den Figuren wird der Wahrscheinlichkeitswert 7 periodisch neu berechnet. Die Periode beträgt hier 30 Sekunden. Daher sind in Fig. 2 einzelne Abschnitte 8 eingeteilt, für die berechnet wird, ob der Wahrscheinlichkeitswert gleichbleibt, erhöht oder erniedrigt wird.

Der Wahrscheinlichkeitswert 7 wird bei der Ausführungsform in den Figuren für einen folgenden Abschnitt 8 gegenüber dem vorherigen Abschnitt 8 erhöht, wenn wenigstens eine sogenannte Beobachtung 9 registriert wurde, die in Fig. 2 schraffiert dargestellt ist. Eine Beobachtung 9 wird registriert, wenn hierfür vorbestimmte Bedingungen, wie z. B. Ereignisse 6, innerhalb der Sensordaten erkannt sind. Es gibt verschiedene Typen von Beobachtungen 9. In diesem Beispiel sind die Beobachtungen 9 ein Anzeichen dafür, dass sich das mobile Endgerät 2 in dem Fahrzeug 3 befindet. Wenn also eine vorbekannte Beobachtung 9 registriert wurde, wird der Wahrscheinlichkeitswert 7 um einen festen Wert erhöht.

Allerdings ist bei der beispielhaften Ausführungsform in den Figuren der Wahrscheinlichkeitswert 7 nach oben auf einen Maximalwert begrenzt, dass dieser in Fig. 2 beispielsweise nicht höher als 70% steigt. Wenn in einem Abschnitt 8 keine Beobachtung 9 registriert wurde, wird der Wahrscheinlichkeitswert 7 reduziert. Beispielsweise sind in diesem Abschnitt 8 ohne Beobachtung 9 keine Ereignisse registriert wurden, die für einen Aufenthalt des mobilen Endgeräts 2 in dem Fahrzeug 3 sprechen.

In der folgenden Tabelle sind einige Beispiele für mögliche Typen von Beobachtungen 9 aufgelistet.

| Beobachtungstyp | Sensordatenart | Beschreibung |
|---|---|---|
| Beacon | Beacon-Signal | Wird der Empfang eines Signals eines Bluetooth-Beacons 5 von der Sensorik des mobilen Endgeräts 2 registriert und dies mit einer vorbestimmten Zeit und einer vorbestimmten Intensität geschieht, wird eine Beacon-Beobachtung registriert. |
| Cruising (Fahren) | Positionsdaten | Hier werden die GNSS-Positionen des mobilen Endgeräts 2 ausgewertet. Wenn über einen vorbestimmten Zeitraum eine vorbestimmte Mindestgeschwindigkeit erreicht ist, wird diese Cruising-Beobachtung registriert. |
| OutofVehicle (außerhalb des Fahrzeugs) | Smartphone-Activities | Activities sind Anzeigen, die vom Betriebssystem eines Smartphones in vorgefertigten Kategorien, wie Walking oder Bicycle, ausgegeben werden. Wenn diese Anzeigen einen vorbestimmten Schwellwert übersteigen, wird die OutofVehicle-Beobachtung aktiviert. |
| Suppressor | Positionsdaten | Hier werden ebenfalls GNSS-Positionen ausgewertet. Wenn festgestellt wird, dass das mobile Endgerät 2 sich in vordefinierten Bereichen befindet, kann diese Suppressor-Beobachtung gesetzt werden. Diese vordefinierten Bereiche können definiert werden, um eine Veränderung des Wahrscheinlichkeitswertes 7 in diesem Bereich gezielt zu verhindern. |

Bei der beispielhaften Ausführungsform in den Figuren wird beim Einstieg des Benutzers 1 mit seinem mobilen Endgerät 2 die App auf dem mobilen Endgerät 2 händisch aktiviert und eine vorbestimmte Aktion ausgeführt. Beispielsweise drückt er einen Software-Knopf oder führt eine vorbestimmte Wischbewegung aus. Dadurch wird der sogenannte Check-in ausgelöst, mit dem sich der Benutzer als im Fahrzeug anwesend zu erkennen gibt. Alternativ könnte der Check-in auch automatisch mit Hilfe des erfindungsgemäßen Verfahrens ermittelt werden.

Beim händischen Check-in kann sehr sicher davon ausgegangen werden, dass sich das mobile Endgerät 2 in diesem Abschnitt 8 in dem Fahrzeug 3 befindet. Daher wird am Anfang des Diagramms in Fig. 2 bei 0 Minuten ein vorbestimmt hoher Wahrscheinlichkeitswert 7 gesetzt, hier 70%.

Während des ersten Abschnitts (0 Sekunden bis 30 Sekunden) nach dem Einstieg sind anhand der Sensordaten weitere Ereignisse 6 registriert worden, was durch Rauten dargestellt ist.

Bei der beispielhaften Ausführungsform in den Figuren ist der Wahrscheinlichkeitswert 7 nach oben auf 70% begrenzt. Dies hat den Vorteil, dass der Wahrscheinlichkeitswert 7 nicht unendlich steigen kann. Die Ereignisse 6 haben dazu geführt, dass wenigstens eine Beobachtung 9 in dem ersten Abschnitt 8 registriert wurde. Ohne die hier verwendete Obergrenze des Wahrscheinlichkeitswerts 7 würde dieser durch die Beobachtung 9 weiter ansteigen. Ein zu hoher Wahrscheinlichkeitswert 7 benötigt aber einige Beobachtungen 9, um signifikant gesenkt zu werden. Dadurch könnte ggf. zu lange von einem Fahren im Fahrzeug 3 ausgegangen werden, was eine unerwünschte Trägheit bedingen würde.

Im nächsten Abschnitt 8 (30 Sekunden bis 1 Minute) wurden anhand der Sensordaten keine Bedingungen erfüllt, die eine der Beobachtungen 9 ausgelöst hätten. Daher wird der Wahrscheinlichkeitswert 7 gesenkt, weil bei der beispielhaften Ausführungsform in den Figuren davon ausgegangen wird, dass keine Sensordaten für ein Fahren, also eine Anwesenheit im Fahrzeug 3 sprechen. Unterschiedliche Beobachtungen 9 können den Wahrscheinlichkeitswert 7 unterschiedlich verändern, da sie gegebenenfalls unterschiedlich gewichtet sind.

Sobald ein erster Wahrscheinlichkeitswert 7 vorhanden ist, wie beispielsweise im ersten Abschnitt (0 Sekunden bis 30 Sekunden), kann dieser Wert mit der Berücksichtigung einer sogenannten bedingten Wahrscheinlichkeit verarbeitet werden.

Mit Bezug auf die folgende Formel sei angenommen, man habe eine Wahrscheinlichkeit p(A), dass der Benutzer 1 bzw. sein mobiles Endgerät 2 in dem Fahrzeug 3 fährt. Zusätzlich wurde ein Ereignis B beobachtet, das mit dem Fahren in Verbindung gebracht werden kann. Es stellt sich die Frage, wie das Ereignis B den Wahrscheinlichkeitswert verändert. Diese Frage kann mit dem Satz von Bayes beantwortet werden:

$$p(A|B) = \frac{p(B|A) * p(A)}{p(B|A) * p(A) + p(B|\neg A) * p(\neg A)}$$

p(A|B) ist hierbei die bedingte Wahrscheinlichkeit von A unter der Bedingung B. Diese kann auch als Wahrscheinlichkeit von A nachdem B beobachtet wurde gelesen werden. p(B|A) ist umgekehrt die Wahrscheinlichkeit B zu beobachten, wenn A vorausgesetzt ist. ¬ in der Formel bezeichnet die Verneinung.

Es gilt folgende Identität:

$$p(\neg A) = 1 - p(A)$$

Um die Schätzung oder den Wahrscheinlichkeitswert 7 anzupassen, nachdem B beobachtet wurde, müssen also nur die bedingten Wahrscheinlichkeiten p(B|A) und p(B|¬A) abgeschätzt werden. Z. B. könnte B für eine Beobachtung einer Gehbewegung (anhand einer Walking Activity) sein. p(B|A) ist dann die bedingte Wahrscheinlichkeit, dass der Benutzer am Fahren ist und eine solche Walking Activity passiert. So betrachtet ist es leicht einzusehen, dass der Wert recht klein sein muss. Z. B. wäre es möglich, den Wahrscheinlichkeitswert 7 anhand der schon aufgezeichneten Activities abzuschätzen. p(B|¬A) ist dann die bedingte Wahrscheinlichkeit, dass eine Walking Activity beobachtet wird, wenn der Benutzer ausgestiegen ist. Die Versuchung ist groß, diesen Wert relativ hoch abzuschätzen. Aber es ist zu bedenken, dass der Benutzer nicht unbedingt sofort losgeht, wenn er ausgestiegen ist. Er könnte erst noch eine Weile stehen bleiben. Auch ist es möglich, dass das mobile Endgerät 2 die Gehbewegung nicht sofort erkennt. Deshalb ist dieser Wert beispielsweise nur mit 30% abgeschätzt.

Die folgende Formel zeigt die mögliche Anpassung der Wahrscheinlichkeit, wenn keine Beobachtung gemacht wird:

$$p(A|\neg B) = \frac{p(\neg B|A) * p(A)}{p(\neg B|A) * p(A) + p(\neg B|\neg A) * p(\neg A)}$$

$$p(\neg B|A) = 1 - p(B|A)$$

$$p(\neg B|\neg A) = 1 - p(B|\neg A)$$

Wenn der Wahrscheinlichkeitswert 7 oder in der Formel p(A) sehr groß, etwa 100%, oder sehr klein, etwa 0%, ist, dann dauert es sehr lange, bis die Schätzung sich wirklich von der extremen Marke wegbewegt. Deshalb ist es wie oben schon beschrieben vorteilhaft, den Wahrscheinlichkeitswert 7 nach oben <=90% und nach unten >=10% zu begrenzen.

Auf die oben genannte Weise wird der Wahrscheinlichkeitswert 7 in den Figuren 2 und 3 verändert.

Ferner ist festgelegt, welchen Wert die Schätzung beim Check-in haben soll. Hier wird in der beispielhafte Ausführungsform in den Figuren angenommen, dass der Benutzer 1 gleich losfahren will, wenn er eincheckt. Daher wird der Wahrscheinlichkeitswert 7 gleich auf den Maximalwert gesetzt. Falls der Benutzer 1 in Wirklichkeit noch etwas mit dem Einsteigen wartet, wird der Wahrscheinlichkeitswert 7 zunächst etwas fallen, jedoch wieder steigen, sobald der Benutzer 1 wirklich losfährt.

Die Darstellung in Fig. 3 zeigt die gleichen Wahrscheinlichkeitswerte 7 wie in Fig. 2. Allerdings sind in Fig. 3 nicht die Beobachtungen 9 eingezeichnet wie in Fig. 2, sondern ein Aufenthaltssignal 10, das aus den Wahrscheinlichkeitswerten 7 generiert wird, wenn der Wahrscheinlichkeitswert 7 unter die Schwelle von 50% sinkt. Die verschiedenen Wahrscheinlichkeitswerte 7 werden somit in das Aufenthaltssignal 10 umgewandelt, aus dem letztendlich der automatische Check-out des mobilen Endgerätes 2 ermittelt wird.

Beispielsweise wird in dem zweiten Abschnitt 8 (30 Sekunden bis 1 Minute) das Aufenthaltssignal 10 erhöht, weil der Wahrscheinlichkeitswert 7 unterhalb von 50% liegt. In den folgenden Abschnitten 8 im Bereich einer Minute bis 2,5 Minuten liegt der Wahrscheinlichkeitswert 7 wieder oberhalb von 50%, so dass das Aufenthaltssignal 10 wieder auf 0% reduziert wird. Erst in den Abschnitten 8 ab 2,5 Minuten sinkt der Wahrscheinlichkeitswert 7 erneut und das Aufenthaltssignal 10 wird sukzessive erhöht. Je nachdem ob der Wahrscheinlichkeitswert 7 in einem Abschnitt 8 oberhalb oder unterhalb der 50% Schwelle liegt, wird dies durch einen nach oben oder unten gerichteten Pfeil 11 gezeigt.

Wenn das Aufenthaltssignal 10 oberhalb von 50% liegt, wird ein Check-out des mobilen Endgeräts 2 angenommen bzw. generiert, der auch als Be-out bezeichnet werden kann. Bei der beispielhaften Ausführungsform in den Figuren wird das Aufenthaltssignal 10 negativ beim Fahren - also im Fahrzeug 3 - und positiv beim Aussteigen aus dem Fahrzeug 3. Dies hat den Vorteil, dass das Aussteigen detektiert, aber das Fahren geschätzt wird.

Ein Check-out - also ein Verlassen des mobilen Endgeräts 2 aus dem Fahrzeug 3 - wird bei der beispielhaften Ausführungsform in den Figuren angenommen, wenn das Aufenthaltssignal 10 über eine vorbestimmte Zeit oberhalb von 50% liegt. Andere Grenzwerte für den Check-out sind selbstverständlich möglich.

Um das Umsteigen des Benutzers 1 beispielsweise in einem Bahnhof zu ermöglichen, ohne dass für diesen der Check-out durchgeführt wird, kann das Verfahren erweitert werden. Beispielsweise wird dem Benutzer 1 auf seinem mobilen Endgerät 2 ein Fenster angezeigt, dass der Check-out bevorsteht, wenn er nicht mit einer Eingabe tätig wird. So kann der Check-out manuell verhindert werden.

Die in den Figuren 2 und 3 dargestellten Schritte des erfindungsgemäßen Verfahrens in der beispielhaften Ausführungsform in den Figuren wird ausschließlich mit Hilfe des mobilen Endgeräts 2 ausgeführt. Dies hat den Vorteil, dass keine Kommunikation mit dem Servercomputer 4 nötig ist und das Verfahren offline ablaufen kann. Es müssen auch keine Daten mit dem Servercomputer 4 ausgetauscht werden, die bezüglich des Datenschutzes des Benutzers 1 bedenklich wären. Dies ist ein wesentlicher Vorteil des erfindungsgemäßen Verfahrens.

Wenn der Be-out des mobilen Endgeräts 2 ermittelt worden ist, d. h. angenommen werden kann, dass der Benutzer 1 mit seinem mobilen Endgerät 2 das Fahrzeug 3 verlassen hat, können der Check-in und der Check-out an den Servercomputer 4 übermittelt werden. Der Servercomputer 4 kann anschließend einen Fahrpreis für die Benutzung des Fahrzeugs 3 ermitteln und dem Benutzer 1 in bekannter Weise in Rechnung stellen.

**Patentansprüche**

1. Verfahren zum Bestimmen eines Aufenthalts eines mobilen Endgerätes (2), insbesondere eines Smartphones, eines Benutzers (1) relativ zu einem Fahrzeug (3), insbesondere einem öffentlichen Verkehrsmittel,

   bei dem auf dem mobilen Endgerät (2) Sensordaten von mehreren Sensoren des mobilen Endgerätes (2) erzeugt werden,
   bei dem anhand der Sensordaten wenigstens ein Wahrscheinlichkeitswert (7) ermittelt wird, der für eine Wahrscheinlichkeit repräsentativ ist, dass sich das mobile Endgerät (2) in dem Fahrzeug (3) befindet oder nicht, und
   bei dem der Aufenthalt in Abhängigkeit von dem wenigstens einen Wahrscheinlichkeitswert (7) bestimmt wird.

2. Verfahren nach Anspruch 1,
   **dadurch gekennzeichnet, dass** nacheinander mehrere Wahrscheinlichkeitswerte (7) ermittelt werden und aus den mehreren Wahrscheinlichkeitswerten (7) ein gemeinsames Aufenthaltssignal (10) errechnet wird und dass der Aufenthalt in Abhängigkeit von dem Aufenthaltssignal (10) bestimmt wird.

3. Verfahren nach Anspruch 2,
   **dadurch gekennzeichnet, dass** für hintereinanderliegende Abschnitte (8) mit vorbestimmter zeitlicher Länge jeweils ein Wahrscheinlichkeitswert (7) ermittelt wird.

4. Verfahren nach Anspruch 2 oder 3,
   **dadurch gekennzeichnet, dass** bei der Berechnung des Aufenthaltssignals (10) die mehreren Wahrscheinlichkeitswerte (7) oder Werte kumuliert werden, die jeweils anhand der mehreren Wahrscheinlichkeitswerte (7) bestimmt werden.

**5.** Verfahren nach einem der Ansprüche 2 bis 4,
**dadurch gekennzeichnet, dass** das Aufenthaltssignal (10) nach oben und/oder nach unten beschränkt wird.

**6.** Verfahren nach einem der oben genannten Ansprüche,
**dadurch gekennzeichnet, dass** der Wahrscheinlichkeitswert (7) durch wenigstens eine vorbestimmte Aktion am mobilen Endgerät (2), insbesondere eine Check-in Aktion des Benutzers (1), auf einen vorbestimmten Wert gesetzt wird.

**7.** Verfahren nach einem der oben genannten Ansprüche,
d**adurch gekennzeichnet,** dass bei der Ermittlung des wenigstens einen Wahrscheinlichkeitswerts (7) wenigstens eine Beobachtung (9) berücksichtigt wird, wenn eine oder mehrere vorbestimmte Bedingungen für diese Beobachtung (9) innerhalb der Sensordaten erfüllt sind.

**8.** Verfahren nach Anspruch 7,
**dadurch gekennzeichnet, dass** die wenigstens eine vorbestimmte Beobachtung (9) bei der Ermittlung des wenigstens einen Wahrscheinlichkeitswerts (7) individuell gewichtet wird.

**9.** Verfahren nach einem der oben genannten Ansprüche,
**dadurch gekennzeichnet, dass** bei der Ermittlung des Wahrscheinlichkeitswerts (7) eine bedingte Wahrscheinlichkeit ermittelt wird.

**10.** Verfahren nach einem der oben genannten Ansprüche,
**dadurch gekennzeichnet, dass** das Verfahren ausschließlich auf dem mobilen Endgerät (2) durchgeführt wird.

**11.** Verfahren nach einem der oben genannten Ansprüche,
d**adurch gekennzeichnet,** dass Informationen zum bestimmten Aufenthalt vom mobilen Endgerät (2) an einen Servercomputer (4) gesendet werden.

**12.** Computerprogrammprodukt mit Programmbefehlen zur Durchführung des Verfahrens nach einem der Ansprüche 1 bis 11.

**13.** Bereitstellungsvorrichtung für das Computerprogrammprodukt nach Anspruch 12, wobei die Bereitstellungsvorrichtung das Computerprogrammprodukt speichert und/oder bereitstellt.

**14.** Mobiles Endgerät (2), insbesondere Smartphone, das zur Durchführung des Verfahrens nach einem der Ansprüche 1 bis 11 ausgebildet ist.

**15.** System zum Bestimmen eines Aufenthalts eines mobilen Endgerätes (2), insbesondere eines Smartphones, eines Benutzers (1) relativ zu einem Fahrzeug (3), insbesondere einem öffentlichen Verkehrsmittel,

mit wenigstens einem Servercomputer (4), und
mit wenigstens einem einem Benutzer (1) zugeordneten mobilen Endgerät (2) nach Anspruch 14, das zum Übermitteln wenigstens einer Information zu dem bestimmten Aufenthalt an den Servercomputer (4) ausgebildet ist,
wobei der Servercomputer (4) zum Ermitteln eines Fahrpreises für den Aufenthalt ausgebildet ist.

EP 4 262 249 A1

FIG 1

FIG 2

FIG 3

Europäisches Patentamt
European Patent Office
Office européen des brevets

# EUROPÄISCHER RECHERCHENBERICHT

Nummer der Anmeldung

EP 22 16 8133

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2020/125965 A1 (HUAWEI TECH CO LTD [CN]; MEKKI SAMI [DE]) 25. Juni 2020 (2020-06-25) * Seite 1, Zeile 1 – Seite 2, Zeile 22 * * Seite 3, Zeilen 8-10 * * Seite 4, Zeilen 5-9, 21-27 * * Seite 7, Zeilen 8-15 * * Seite 9, Zeilen 1-5 * * Seite 12, Zeilen 1-33 * * Seite 13, Zeile 27 – Seite 14, Zeile 24 * * Abbildungen 3,4,13,14 * ----- | 1-15 | INV. H04W4/38 H04W4/02 G06K9/62 H04W4/40 H04W4/42 H04W4/30 H04L67/52  ADD. H04W88/02 G06Q20/08 G06Q20/14 G06Q30/02 |
| X | OPLENSKEDAL MAGNUS ET AL: "ATARAXIS: A Deep Learning Approach for Hardwareless In-Vehicle Presence Detection", 2021 IEEE THIRD INTERNATIONAL CONFERENCE ON COGNITIVE MACHINE INTELLIGENCE (COGMI), IEEE, 13. Dezember 2021 (2021-12-13), Seiten 1-10, XP034110297, DOI: 10.1109/COGMI52975.2021.00012 * Zusammenfassung * * Abschnitt III.A * * Abschnitt III.C * * Abschnitt V * * Abbildungen 1,3 * ----- -/-- | 1-15 | |

RECHERCHIERTE SACHGEBIETE (IPC)

G06K
H04W
B60N
G06Q
G07B
G07G

Der vorliegende Recherchenbericht wurde für alle Patentansprüche erstellt

| Recherchenort | Abschlußdatum der Recherche | Prüfer |
|---|---|---|
| Den Haag | 1. September 2022 | Krause, Sven |

EPO FORM 1503 03.82 (P04C03)

Seite 1 von 2

Europäisches
Patentamt

European
Patent Office

Office européen
des brevets

# EUROPÄISCHER RECHERCHENBERICHT

Nummer der Anmeldung

**EP 22 16 8133**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | Kamalian Mahdieh ET AL: "A survey on local transport mode detection on the edge of the network", Applied intelligence (Dordrecht, Netherlands), 19. März 2022 (2022-03-19), XP055956402, DOI: 10.1007/s10489-022-03214-y Gefunden im Internet: URL:https://link.springer.com/content/pdf/10.1007/s10489-022-03214-y.pdf [gefunden am 2022-08-30] * das ganze Dokument * ----- | 1-15 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| Den Haag | 1. September 2022 | Krause, Sven |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

**Seite 2 von 2**

**ANHANG ZUM EUROPÄISCHEN RECHERCHENBERICHT
ÜBER DIE EUROPÄISCHE PATENTANMELDUNG NR.**                    EP 22 16 8133

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-09-2022

| Im Recherchenbericht angeführtes Patentdokument | Datum der Veröffentlichung | Mitglied(er) der Patentfamilie | Datum der Veröffentlichung |
|---|---|---|---|
| WO 2020125965 A1 | 25-06-2020 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2658291 A1
- US 8660867 B2